# EUROPEAN PATENT SPECIFICATION

(11) **EP 3 375 699 B1**
(45) Date of publication and mention of the grant of the patent: **13.10.2021**
(21) Application number: 18160975.1
(22) Date of filing: 09.03.2018
(51) Int. Cl.: B62J 1/14, B62J 17/00

(54) **SADDLE-RIDE TYPE VEHICLE**
SATTELFAHRZEUG
VÉHICULE DE TYPE À SELLE

(30) Priority: 13.03.2017 JP 2017047702
(43) Date of publication of application: 19.09.2018
(73) Proprietor: Honda Motor Co., Ltd., Minato-ku Tokyo 107-8556 (JP)
(72) Inventor: Komatsu, Akihiro, Saitama, 351-0193 (JP); Takigawa, Kanya, Saitama, 351-0193 (JP); Niwa, Shoji, Saitama, 351-0193 (JP)
(74) Representative: Beder, Jens

(56) References cited:
- EP-A2- 3 225 517
- JP-A- H02 147 484
- JP-A- 2005 349 907
- JP-A- 2014 108 748
- US-A1- 2010 084 212
- US-B1- 6 648 408

## Description

The present invention relates to a saddle-ride type vehicle including a front seat and a rear seat disposed behind the front seat.

JP 2015-033901 discloses a two-wheeled motor vehicle (saddle-ride type vehicle) that includes a front seat and a rear seat. The front seat and the rear seat are disposed in tandem on seat rails and at positions behind a fuel tank.

A faying surface is formed on a rear end of the front seat and a front end of the rear seat. The faying surfaces vertically intersect a mounting plane of the seat rails (a plane connecting the left and right seat rails). With such a structure, simply mating the faying surface of the rear seat with the faying surface of the front seat in an attempt to mounting the rear seat does not readily facilitate positioning of the rear seat. In particular, the structure does not allow a bottom plate side of the rear seat to be observed during mounting. This defies building of a structure or a mechanism that combines the bottom plate of the rear seat with the seat rails.

JP 2005-349907 discloses a two-wheeled saddle-ride type vehicle with a front and a rear seat which are overlapping each other. The vehicle side body cover extends below the two seats.

The present invention has been made in view of the foregoing situation and it is an object of the present invention to provide a saddle-ride type vehicle that enables simple positioning of a rear seat with respect to a front seat.

To achieve the foregoing object, according to a first aspect of the present invention, there is provided a saddle-ride type vehicle according to claim 1.

According to a second aspect of the present invention, in addition to the first aspect, the vehicle body covers each have an inclined surface that lowers in going toward the front and gets under a rear end of the front seat.

According to a third aspect of the present invention, in addition to the second aspect, there is provided the saddle-ride type vehicle, further comprising: a bar member disposed below a horizontal plane that includes the rear end of the front seat and behind the inclined surface, the bar member extending in the vehicle width direction in parallel with the horizontal plane; and a hinge member fixed to a bottom plate of the rear seat at a position behind the front end of the rear seat to thereby engage with the bar member.

According to a fourth aspect of the present invention, in addition to the third aspect, the hinge member includes a main body extending for a first length from the bottom plate of the rear seat downwardly to a position behind the bar member, and a bent body extending for a second length which is shorter than the first length so as to be continuous from the main body and extend around a lower side of the bar member to thereby define a rotational axis of the rear seat.

According to a fifth aspect of the present invention, in addition to any one of the first to fourth aspects, there is provided the saddle-ride type vehicle, further comprising: a bottom plate member fixedly disposed on the vehicle body frame at a position below the rear end of the front seat, to thereby define a housing space between the bottom plate member and a bottom surface of the front seat.

With the first aspect, when the rear seat is mounted at a position behind the front seat, the front end of the rear seat is received by the rear end of the front seat. The disposition of the vehicle body covers along the edge of the rear seat from the rear end of the front seat creates a visual sense of unity of the vehicle body covers, the front seat, and the rear seat, thus contributing to enhanced styling of the saddle-ride type vehicle. When the rear end of the rear seat is held up to mount the rear seat, the front end of the rear seat can be received on the vehicle body covers at positions behind the curved edge. At this time, the rear end of the front seat restricts displacement of the rear seat toward the front. An assembly worker can position the rear seat with respect to the front seat, while visually recognizing the bottom surface side of the rear seat. This simplifies the assembly work of the rear seat. When the rear end of the rear seat is thereafter pressed down with the front end of the rear seat as a pivot, the front end of the rear seat being in contact with the rear end of the front seat, the rear seat is disposed at a prescribed position. Because the rear end of the front seat is recessed toward the front, contact is avoided between the rear end of the front seat and the front end of the rear seat at positions other than the pivot during the depression of the rear end of the rear seat, so that the rear seat can be smoothly rotated about the pivot. Efficiency in the assembly work is thus enhanced.

With the second aspect, at assembly, the front end of the rear seat can slide over the inclined surface. The rear seat, when received by the inclined surface at any position, slides toward the front by gravity and is then received by the rear end of the front seat. Thus, the positioning of the rear seat can be further simplified.

With the third aspect, at assembly, when the front end of the rear seat is positioned with respect to the rear end of the front seat with the rear end of the rear seat raised, the hinge member of the rear seat is located above the bar member. The worker can, while confirming a positional relation between the hinge member and the bar member, press down the rear end of the rear seat to thereby dispose the rear seat at a prescribed position. The rear seat is prevented from falling, because the front end of the rear seat is supported by the vehicle body covers and the rear end of the front seat. When pressing down the rear seat, the rear seat can be smoothly rotated.

Additionally, because the bar member is disposed behind the inclined surface, the front end of the rear seat does not interfere with the bar member during assembly of the rear seat. This feature enables smooth positioning of the rear seat and rotation of rear seat about the pivot.

With the fourth aspect, because a tip end of the hinge member is spaced a great distance away from the bottom plate of the rear seat, interference between the hinge member and the bar member can be easily observed during assembly. The rear seat can be easily assembled while, at the same time, the interference between the hinge member and the bar member is avoided.

With the fifth aspect, a space below the rear end of the front seat can be effectively used as the housing space. Access to the housing space can be gained as the rear seat is removed.
[FIG. 1] It is a side view schematically depicting a whole configuration of a two-wheeled motor vehicle according to an embodiment of the present invention.
[FIG. 2] It is a plan view of the two-wheeled motor vehicle as viewed from above.
[FIG. 3] It is an enlarged side view of a rear portion of the two-wheeled motor vehicle.
[FIG. 4] It is a schematic view of a structure below a rear seat to be observed from an obliquely upper direction from the rear.
[FIG. 5] It is an enlarged partial sectional view schematically depicting the structure below the rear seat, in which part of the rear seat is cut away.
[FIG. 6] It is an enlarged side view of the rear portion when the rear seat is mounted.

An embodiment of the present invention will be described below with reference to the accompanying drawings.

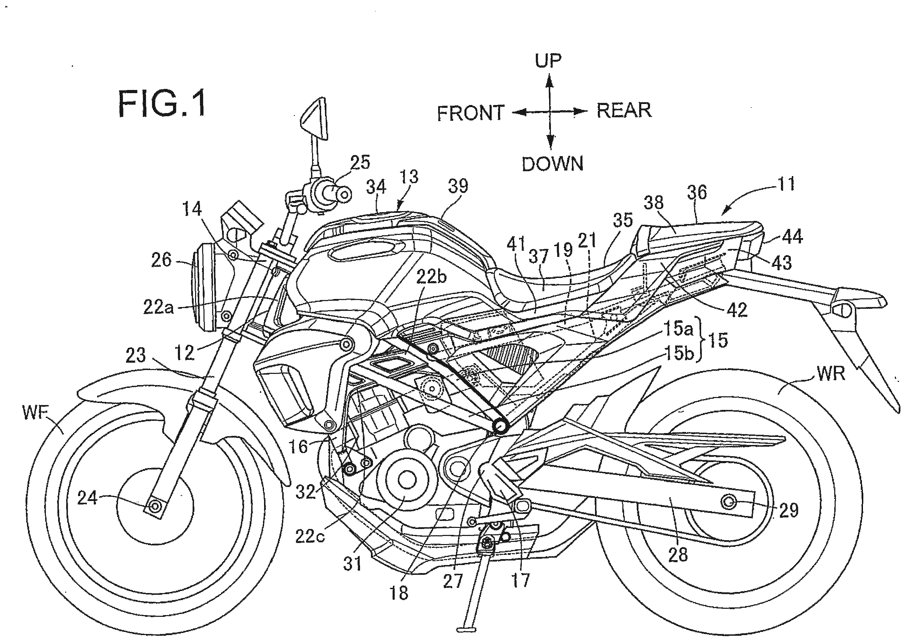

FIG. 1 schematically depicts a whole configuration of a two-wheeled motor vehicle (saddle-ride type vehicle) according to an embodiment of the present invention. This two-wheeled motor vehicle 11 includes a vehicle body frame 12 and a vehicle body cover 13. The vehicle body cover 13 is mounted on, and partially covers, the vehicle body frame 12. The vehicle body frame 12 includes a head pipe 14, a pair of left and right main frames 15, a pair of left and right down frames 16, a pair of left and right pivot frames 17, a cross tube 18, a pair of left and right seat rails 19, and a rear frame 21. The main frames 15 extend from the head pipe 14 downwardly toward the rear. The down frames 16 are disposed to be spaced apart from and below the main frames 15 and extend from the head pipe 14 downwardly toward the rear. The pivot frames 17 are connected to rear ends of respective main frames 15 and extend downwardly. The cross tube 18 extends in a horizontal direction and connects the left and right pivot frames 17. The seat rails 19 extend from the respective main frames 15 upwardly toward the rear. The rear frame 21 is disposed below the seat rails 19 and connected with the cross tube 18 and the seat rails 19. The rear frame 21 extends from the cross tube 18 upwardly toward the rear to thereby support the seat rails 19 from below.

The main frames 15 each include a first frame 15a and a second frame 15b. The first frame 15a is spaced apart, for example, in the up-down direction from the second frame 15b. The first frame 15a and the second frame 15b are each formed of, for example, a pipe material having a circular section shape. The first frame 15a is connected with the second frame 15b by reinforcements 22a and 22b. The reinforcements 22a and 22b reinforce stiffness of an assembly of the first frame 15a and the second frame 15b. Similarly, the down frame 16 is connected with the second frame 15b by a reinforcement 22c. The reinforcement 22c reinforces stiffness between the down frame 16 and the main frame 15.

The head pipe 14 steerably supports a front fork 23. The front fork 23 supports a front wheel WF rotatably about an axle 24. A steering handlebar 25 is connected with an upper end of the front fork 23. A headlight unit 26 is fixed to the steering handlebar 25 at a position in front of the head pipe 14.

A swing arm 28 is connected with the vehicle body frame 12 swingably in the up-down direction about a pivot 27 at a rear portion of the vehicle. A rear wheel WR is supported at a rear end of the swing arm 28 rotatably about an axle 29. An internal combustion engine unit 31 is mounted on the vehicle body frame 12 between the front wheel WF and the rear wheel WR. The internal combustion engine unit 31 includes a water-cooled engine main unit 32 and a radiator (not depicted). The engine main unit 32 generates drive force to be transmitted to the rear wheel WR. The radiator is connected with the engine main unit 32. Cooling water circulates between the radiator and the engine main unit 32. Heat of the engine main unit 32 is radiated from the radiator using the cooling water as a refrigerant.

The main frames 15 have lower ends connected with a rear side of the engine main unit 32 and the down frames 16 have lower ends connected with a front side of the engine main unit 32. The main frames 15, the down frames 16, and the engine main unit 32 establish a rigid body structure. The down frames 16 function as so-called an engine hanger. The pivot 27 is supported by the pivot frames 17.

A fuel tank 34 is disposed at a position above the main frames 15. A front seat 35 and a rear seat 36 for occupants are mounted on the seat rails 19 at a position behind the fuel tank 34. The front seat 35 and the rear seat 36 have seating surfaces 37 and 38, respectively, each expanding along a horizontal surface while holding a prescribed three-dimensional shape.

The vehicle body cover 13 includes a tank cover 39, a side cover 41, a rear cover 42, and a tail cover 43. The tank cover 39 covers the fuel tank 34. The side cover 41 covers the vehicle body frame 12 from opposite sides at positions below the front seat 35 so as to be continuous from the tank cover 39. The rear cover 42 covers the vehicle body frame 12 from opposite sides at positions below the rear seat 36 so as to be continuous from the side cover 41. The tail cover 43 is connected with the rear cover 42 to thereby cover the vehicle body frame 12 from the rear. A tail lamp 44 is incorporated in the tail cover 43. The tank cover 39, the side cover 41, the rear cover 42, and the tail cover 43 are each molded from, for example, a resin material.

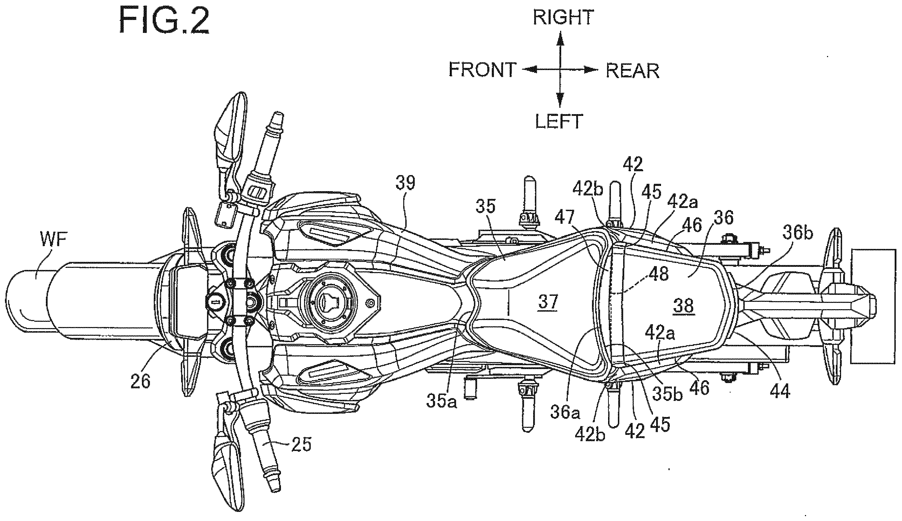

Reference is made to FIG. 2. The front seat 35 has a connection end 35a at a front end and a curved edge 35b at a rear end. The connection end 35a has a shape contoured to the rear end of the tank cover 39 and is connected to be continuous with the tank cover 39. The curved edge 35b is recessed toward the front as seen in a plan view. The curved edge 35b is displaced most to the front at a central position in a vehicle width direction. The seating surface 37 of the front seat 35 gradually widens in the vehicle width direction toward the rear. The seating surface 37 is formed of, for example, a surface of a skin such as artificial leather covering a cushioning material.

The rear seat 36 has a front end 36a and a curved surface 47. The front end 36a bulges and curves toward the front so as to correspond to the curved edge 35b of the front seat 35. The curved surface 47 expands from the front end 36a toward the rear and bulges so as to correspond to the curved edge 35b of the front seat 35 to thereby be connected to the seating surface 38. The tail lamp 44 has a shape contoured to a rear end 36b of the rear seat 36.

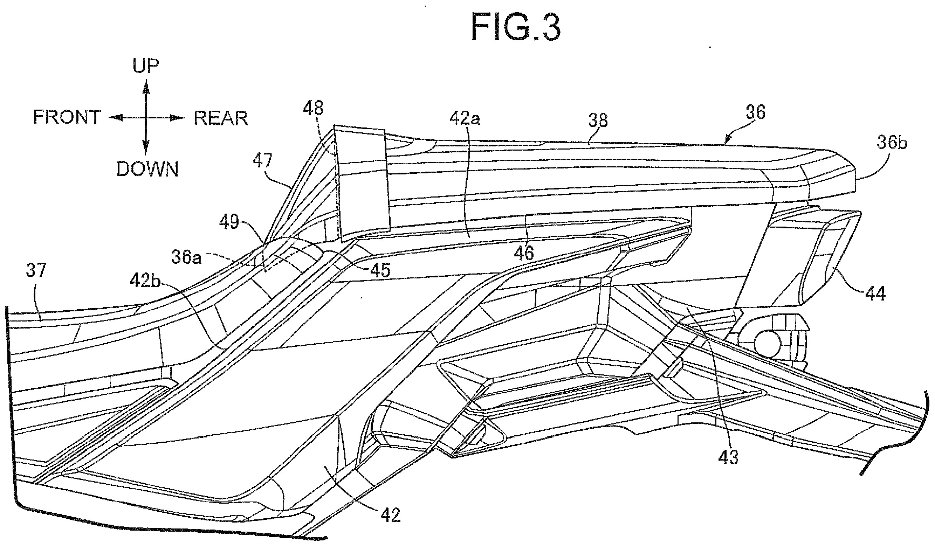

The rear cover 42 has an upper surface 42a and an inclined surface 42b. The upper surface 42a extends from each of the opposite ends 45 in the vehicle width direction of the curved edge 35b toward the rear along a lower surface of the rear seat 36 on each of left and right edges 46 of the rear seat 36. The inclined surface 42b is continuous with a front end of the upper surface 42a and gets under a rear end of the front seat 35 at each of the opposite ends 45 in the vehicle width direction of the curved edge 35b. As depicted in FIG. 3, the inclined surface 42b lowers in going toward the front, extending along a lower surface of the front seat 35 on each of the opposite ends 45 in the vehicle width direction of the curved edge 35b. It is here noted that a gap is defined between the inclined surface 42b of the rear cover 42 and the front seat 35, and between the upper surface 42a of the rear cover 42 and the rear seat 36. Thus, the front seat 35 and the rear seat 36 are not supported by the rear cover 42. However, the front seat 35 and the rear seat 36 may be in contact with, or supported directly or indirectly by, the inclined surface 42b and the upper surface 42a, respectively, of the rear cover 42.

The curved surface 47 has a rear end connected, at a ridge 48, to a front end of the seating surface 38. The curved surface 47 is inclined from the ridge 48 downwardly toward the front to thereby extend up to the front end 36a of the rear seat 36. The seating surface 38 and the curved surface 47 are each formed of, for example, a surface of a skin such as artificial leather covering a cushioning material. The skin of the seating surface 38 and the skin of the curved surface 47 may be integrated into a single skin or sewed together along the ridge 48. The front end 36a of the rear seat 36 is formed as a band-shaped contact surface of the rear seat 36 with the front seat 35, the contact surface extending along an edge of the rear seat 36. A reliable tight contact can be achieved between the front seat 35 and the rear seat 36 in accordance with an increase in the contact area. The contact surface is inclined at an angle forming a ridge 49 between the contact surface and the curved surface 47.

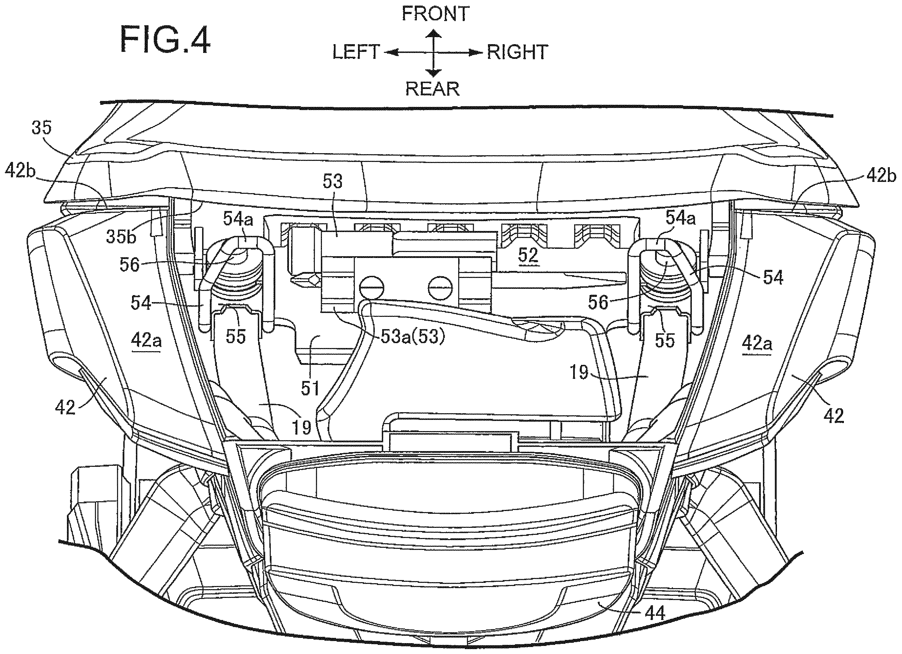

Reference is made to FIG. 4. A bottom plate member 51 is fixedly attached to the seat rails 19 at a position below the rear end of the front seat 35. The bottom plate member 51 extends along a horizontal plane between the seat rails 19. A housing space 52 is thus defined between a bottom surface of the front seat 35 and the bottom plate member 51. A screwdriver 53a and other tools 53 are housed in the housing space 52. The screwdriver 53a and other tools 53 may be fixed to the bottom plate member 51 by, for example, a string-shaped rubber member.

A link member 54 is fixed to each of the seat rails 19 at a position below the rear seat 36. The link member 54 is fixedly attached by a fastener 56 to the seat rail 19 via, for example, a stay 55. A bar piece (bar member) 54a is formed in the link member 54. The bar piece 54a extends in the vehicle width direction in parallel with the horizontal plane. The link member 54 may be, for example, formed by bending a stainless steel bar stock.

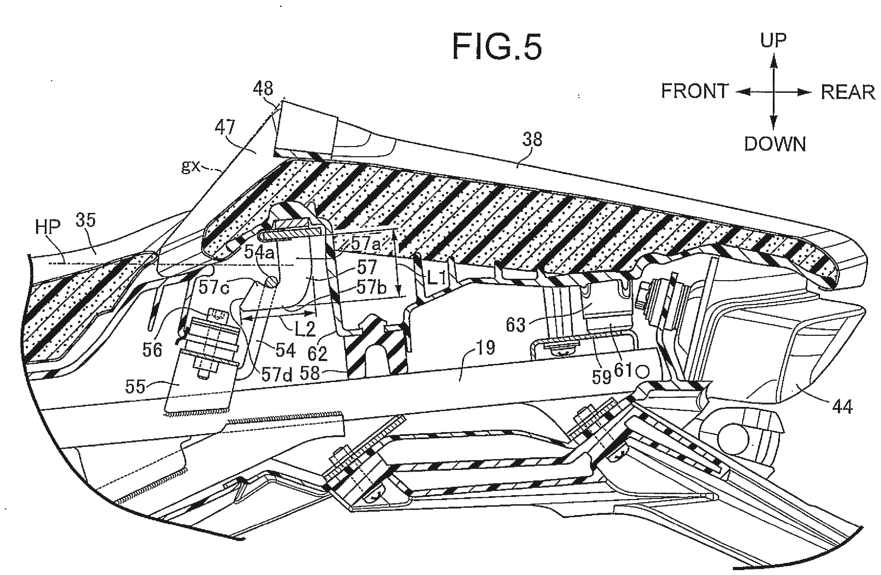

Reference is made to FIG. 5. A pair of left and right hinge members 57, a pair of left and right first cushions 58, and a second cushion 61 are mounted on the bottom plate of the rear seat 36. The hinge members 57 are disposed behind the front end 36a of the rear seat 36. The hinge members 57 engage with the respective link members 54 so as to correspond to them individually. The first cushions 58 are disposed behind the hinge members 57. The first cushions 58 are pressed from above against the respective seat rails 19. The second cushion 61 is disposed behind the first cushions 58. The second cushion 61 is pressed against a cross member 59, which is a flat plate, extending between the seat rails 19. The first cushions 58 and the second cushion 61 function to allow the seat rails 19 to elastically support the rear seat 36.

A pair of left and right first columns 62 and a second column 63 are integrally formed with the bottom plate of the rear seat 36. The first columns 62 extend downwardly toward the respective seat rails 19. The second column 63 is disposed behind the first columns 62 and extends downwardly toward a surface of the cross member 59. The first cushions 58 are fixed to lower ends of the respective first columns 62. The second cushion 61 is fixed to a lower end of the second column 63. Load (e.g., weight of a passenger) acting from above on the rear seat 36 is borne by the seat rails 19 by way of the first columns 62 and the second column 63 of the rear seat 36. The rear seat 36 is supported by the seat rails 19 and the cross member 59 fixedly attached to the seat rails 19 at three points of the first columns 62 and the second column 63.

The hinge members 57 each include a main body 57a and a bent body 57b. The main body 57a has a first length L1 extending from the bottom plate of the rear seat 36 downwardly to a position behind the bar piece 54a. The bent body 57b extends for a second length L2 which is shorter than the first length L1 so as to be continuous from the main body 57a and extend around a lower side of the bar piece 54a to thereby define a rotational axis of the rear seat 36. The bar piece 54a is disposed below a horizontal plane HP that includes the rear end of the front seat 35. The hinge member 57 may be formed of, for example, stainless steel sheet stock having a sheet surface orthogonal to an axis of the bar piece 54a.

The bent body 57b has a protrusion 57c bulging upward, formed at a tip end (front end) thereof. The protrusion 57c is caught by the bar piece 54a of the link member 54 to thereby restrict movement of the hinge members 57 to the rear along the horizontal direction. A tip end surface 57d is defined at the tip end of the bent body 57b. The tip end surface 57d is separated rearward from a generating line gx of the curved surface 47 in going away from the protrusion 57c.

When the rear seat 36 is mounted at a position behind the front seat 35 in the two-wheeled motor vehicle 11, the front end 36a of the rear seat 36 is received by the rear end of the front seat 35. The disposition of the rear cover 42 along the edge of the rear seat 36 from the rear end of the front seat 35 creates a visual sense of unity of the rear cover 42, the front seat 35, and the rear seat 36, thus contributing to enhanced styling of the two-wheeled motor vehicle 11.

As described previously, the curved surface 47 is connected with the front end of the seating surface 38 at the ridge 48 and is inclined and extends from the ridge 48 downwardly toward the front. The curved surface 47 is separated from the seating surface 38 by the ridge 48 and can be curved with a curvature different from a curvature of the seating surface 38. Thus, the seating surface 38 can bulge more mildly compared with the curved surface 47, so that the curved surface 47 can have a greater curvature formed than the seating surface 38. Bulging required for mounting the rear seat 36 can be given to the curved surface 47, while keeping the curvature of the seating surface 38 mild to achieve seating comfort.

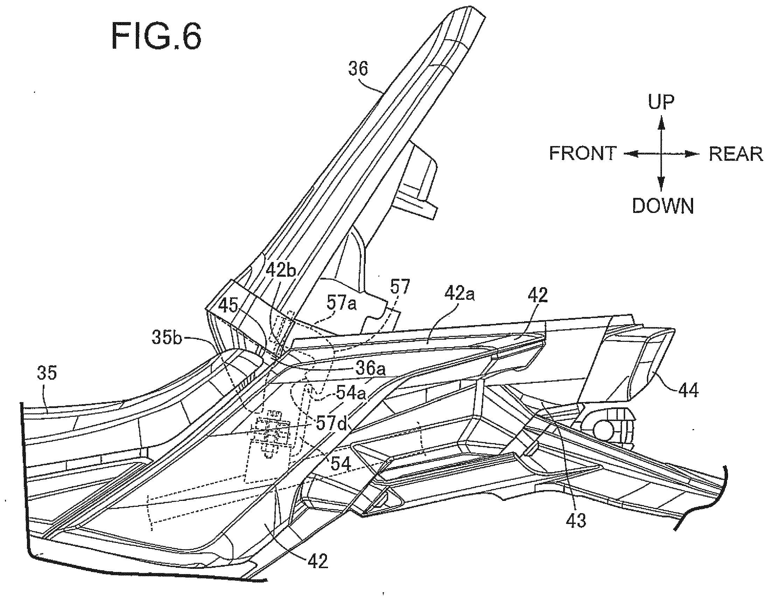

To mount the rear seat 36, the front seat 35 is mounted on the seat rails 19 in advance. Reference is made to FIG. 6. When the rear end 36b of the rear seat 36 is held up to mount the rear seat 36, the front end 36a of the rear seat 36 is received on the inclined surfaces 42b of the rear cover 42 at positions behind the opposite ends 45 in the vehicle width direction of the curved edge 35b. At this time, the rear end of the front seat 35 restricts displacement of the rear seat 36 toward the front. An assembly worker can position the rear seat 36 with respect to the front seat 35, while visually recognizing the bottom surface side of the rear seat 36. This simplifies the assembly work of the rear seat 36.

When the rear end 36b of the rear seat 36 is thereafter pressed down with the front end 36a of the rear seat 36 as a pivot, the front end 36a of the rear seat 36 being in contact with the rear end of the front seat 35, the rear seat 36 is disposed at a prescribed position. Because the rear end of the front seat 35 is recessed toward the front, contact is avoided between the rear end of the front seat 35 and the front end 36a of the rear seat 36 at positions other than the pivot during the depression of the rear end 36b of the rear seat 36, so that the rear seat 36 can be smoothly rotated about the pivot. Efficiency in the assembly work is thus enhanced.

The rotation of the rear seat 36 about the pivot causes the main body 57a of the hinge member 57 to contact the bar piece 54a of the link member 54. Even when the bar piece 54a collides against the tip end surface 57d of the hinge member 57, a continued downward movement of the rear seat 36 causes the bar piece 54a to move past the protrusion 57c and to be guided toward the main body 57a of the hinge member 57. The bent body 57b of the hinge member 57 thereby slides along the bar piece 54a of the link member 54. The rear seat 36 can be rotated about the axis (rotational axis) of the bar piece 54a, so that the rear end 36b of the rear seat 36 can be pressed down. The seating surface 38 of the rear seat 36 is disposed at a predetermined position. The front end 36a of the rear seat 36 is shaped so as to correspond to the curved edge 35b of the front seat 35. Thus, the disposition of the rear seat 36 behind the front seat 35 allows the front end 36a of the rear seat 36 to be in contact with the rear end of the front seat 35 with no gap therebetween.

In the embodiment, the rear cover 42 has the inclined surface 42b that lowers in going toward the front and gets under the rear end of the front seat 35. At assembly, the front end 36a of the rear seat 36 can slide over the inclined surface 42b. The rear seat 36, when received by the inclined surface 42b at any position, slides toward the front by gravity and is then received by the rear end of the front seat 35. Thus, the positioning of the rear seat 36 can be further simplified.

In the embodiment, the bar piece 54a is disposed below the horizontal plane HP that includes the rear end of the front seat 35. Meanwhile, the hinge member 57 is fixed to the bottom plate of the rear seat 36 at a position behind the front end 36a of the rear seat 36. At assembly, when the front end 36a of the rear seat 36 is positioned with respect to the rear end of the front seat 35 with the rear end 36b of the rear seat 36 raised, the hinge member 57 of the rear seat 36 is located above the bar piece 54a. The worker can, while confirming a positional relation between the hinge member 57 and the bar piece 54a, press down the rear end 36b of the rear seat 36 to thereby dispose the rear seat 36 at a prescribed position. The rear seat 36 is prevented from falling, because the front end 36a of the rear seat 36 is supported by the rear cover 42 and the rear end of the front seat 35. When pressing down the rear seat 36, the rear seat 36 can be smoothly rotated.

Additionally, because the bar piece 54a is disposed behind the inclined surface 42b, the front end 36a of the rear seat 36 does not interfere with the bar piece 54a during assembly of the rear seat 36. This feature enables smooth positioning of the rear seat 36 and rotation of rear seat 36 about the pivot.

In the hinge member 57, the main body 57a has the first length L1 extending from the bottom plate of the rear seat 36 downwardly to a position behind the bar piece 54a. The bent body 57b has the second length L2 shorter than the first length L1 and extends around the lower side of the bar piece 54a. Because the tip end of the hinge member 57 is spaced a great distance away from the bottom plate of the rear seat 36, interference between the hinge member 57 and the bar piece 54a can be easily observed during assembly. The rear seat 36 can be easily assembled while, at the same time, the interference between the hinge member 57 and the bar piece 54a is avoided.

As described previously, the bottom plate member 51 is fixedly attached to the seat rails 19 at a position below the rear end of the front seat 35. The bottom plate member 51 define the housing space 52 between the bottom plate member 51 and the bottom surface of the front seat 35. Thus, the space below the rear end of the front seat 35 is effectively used as the housing space 52. Access to the housing space 52 can be gained as the rear seat 36 is removed.

### DESCRIPTION OF REFERENCE NUMERALS AND SYMBOLS

- 11: Saddle-ride type vehicle (two-wheeled motor vehicle)
- 12: Vehicle body frame
- 35: Front seat
- 35b: Curved edge
- 36: Rear seat
- 36a: Front end (of rear seat)
- 42: Rear cover as a vehicle body cover
- 42b: Inclined surface
- 45: Opposite ends (of curved edge)
- 46: Opposite edges (of rear seat)
- 51: Bottom plate member
- 52: Housing space
- 54a: Bar member (bar piece)
- 57: Hinge member
- 57a: Main body
- 57b: Bent body
- HP: Horizontal plane

## Claims

1. A saddle-ride type vehicle, comprising:
a vehicle body frame (12),
a front seat (35) supported on the vehicle body frame (12), the front seat (35) having at a rear end thereof a curved edge (35b) that is recessed at a central portion thereof in a vehicle width direction toward a front, as seen in a plan view;
a rear seat (36) supported on the vehicle body frame (12) at a position behind the front seat (35), the rear seat (36) having a front end (36a) bulging at a central portion thereof in the vehicle width direction toward the front, as seen in a plan view, so as to correspond to the curved edge (35b) of the front seat (35) such that the front end (36a) of the rear seat (36) is positioned forwardly of the rear end of the front seat (35) and, as seen in a plan view, the front end (36a) of the rear seat (36) and the rear end of the front seat (35) are overlapped with one another with the front end of the rear seat (36) being placed below the rear end of the front seat (35); and
vehicle body covers (42) mounted on the vehicle body frame (12) and getting under the front seat (35) so as to be along a lower surface of the front seat (35), at opposite ends (45) in the vehicle width direction of the curved edge (35b), the vehicle body covers (42) extending from the opposite ends (45) in the vehicle width direction of the curved edge (35b) toward a rear along a lower surface of the rear seat (36) on opposite edges (46) of the rear seat (36).

2. The saddle-ride type vehicle according to claim 1, wherein the vehicle body covers (42) each have an inclined surface (42b) that lowers in going toward the front and gets under the rear end of the front seat (35).

3. The saddle-ride type vehicle according to claim 2, wherein the rear seat (36) has a curved surface (47) which expands from the front end (36a) toward the rear and bulges so as to correspond to the curved edge (35b) of the front seat (35) to thereby be connected to a seating surface (38) of the rear seat (36).

4. The saddle-ride type vehicle according to claim 2, further comprising:
a bar member (54a) disposed below a horizontal plane (HP) that includes the rear end of the front seat (35) and behind the inclined surface (42b), the bar member (54a) extending in the vehicle width direction in parallel with the horizontal plane (HP); and
a hinge member (57) fixed to a bottom plate of the rear seat (36) at a position behind the front end (36a) of the rear seat (36) to thereby engage with the bar member (54a).

5. The saddle-ride type vehicle according to claim 4, wherein
the hinge member (57) includes
a main body (57a) extending for a first length (L1) from the bottom plate of the rear seat (36) downwardly to a position behind the bar member (54a), and
a bent body (57b) extending for a second length (L2) which is shorter than the first length (L1) so as to be continuous from the main body (57a) and extend around a lower side of the bar member (54a) to thereby define a rotational axis of the rear seat (36).

6. The saddle-ride type vehicle according to any one of claims 1 to 5, further comprising:
a bottom plate member (51) fixedly disposed on the vehicle body frame (12) at a position below the rear end of the front seat (35), to thereby define a housing space (52) between the bottom plate member (51) and a bottom surface of the front seat (35).

## Patentansprüche

1. Fahrzeug vom Satteltyp, aufweisend:
einen Fahrzeugkarosserierahmen (12),
einen Vordersitz (35), der auf dem Fahrzeugkarosserierahmen (12) abgestützt ist, wobei der Vordersitz (35) an seinem hinteren Ende eine gekrümmte Kante (35b) aufweist, die, in einer Draufsicht gesehen, in einem mittleren Abschnitt davon in einer Fahrzeugbreitenrichtung zu einer Vorderseite hin vertieft ist;
einen Rücksitz (36), der an dem Fahrzeugkarosserierahmen (12) an einer Position hinter dem Vordersitz (35) abgestützt ist, wobei der Rücksitz (36) ein vorderes Ende (36a) aufweist, das sich, in einer Draufsicht gesehen, an einem mittleren Abschnitt desselben in der Fahrzeugbreitenrichtung nach vorne wölbt, so dass er der gekrümmten Kante (35b) des Vordersitzes (35) entspricht, so dass das vordere Ende (36a) des Rücksitzes (36) vor dem hinteren Ende des Vordersitzes (35) positioniert ist und, in einer Draufsicht gesehen, das vordere Ende (36a) des Rücksitzes (36) und das hintere Ende des Vordersitzes (35) einander überlappen, wobei das vordere Ende des Rücksitzes (36) unterhalb des hinteren Endes des Vordersitzes (35) angeordnet ist; und
Fahrzeugkarosserieabdeckungen (42), die an dem Fahrzeugkarosserierahmen (12) angebracht sind und unter den Vordersitz (35) greifen, so dass sie sich entlang einer unteren Fläche des Vordersitzes (35) an gegenüberliegenden Enden (45) in der Fahrzeugbreitenrichtung der gekrümmten Kante (35b) befinden, wobei sich die Fahrzeugkarosserieabdeckungen (42) von den gegenüberliegenden Enden (45) in der Fahrzeugbreitenrichtung der gekrümmten Kante (35b) nach hinten entlang einer unteren Fläche des Rücksitzes (36) auf gegenüberliegenden Kanten (46) des Rücksitzes (36) erstrecken.

2. Fahrzeug vom Satteltyp nach Anspruch 1, wobei
die Fahrzeugkarosserieabdeckungen (42) jeweils eine geneigte Fläche (42b) aufweisen, welche sich nach vorne hin senkt und unter das hintere Ende des Vordersitzes (35) greift.

3. Fahrzeug vom Satteltyp nach Anspruch 2, wobei
der Rücksitz (36) eine gekrümmte Fläche (47) aufweist, die sich vom vorderen Ende (36a) nach hinten erweitert und sich so wölbt, dass sie der gekrümmten Kante (35b) des Vordersitzes (35) entspricht, um dadurch mit einer Sitzfläche (38) des Rücksitzes (36) verbunden werden zu können.

4. Fahrzeug vom Satteltyp nach Anspruch 2, ferner aufweisend
ein Stangenelement (54a), das unterhalb einer horizontalen Ebene (HP), die das hintere Ende des Vordersitzes (35) einschließt, und hinter der geneigten Fläche (42b) angeordnet ist, wobei sich das Stangenelement (54a) in Richtung der Fahrzeugbreite parallel zu der horizontalen Ebene (HP) erstreckt; und
ein Scharnierelement (57), das an einer Bodenplatte des Rücksitzes (36) an einer Position hinter dem vorderen Ende (36a) des Rücksitzes (36) befestigt ist, um dadurch mit dem Stangenelement (54a) in Eingriff zu kommen.

5. Fahrzeug vom Satteltyp nach Anspruch 4, wobei
das Scharnierelement (57) aufweist:
einen Hauptkörper (57a), der sich über eine erste Länge (L1) von der Bodenplatte des Rücksitzes (36) nach unten zu einer Position hinter dem Stangenelement (54a) erstreckt, und
einen gebogenen Körper (57b), der sich über eine zweite Länge (L2) erstreckt, die kürzer ist als die erste Länge (L1), so dass er sich von dem Hauptkörper (57a) fortsetzt und um eine Unterseite des Stangenelements (54a) verläuft, um dadurch eine Drehachse des Rücksitzes (36) zu bilden.

6. Fahrzeug vom Satteltyp nach einem der Ansprüche 1 bis 5, ferner aufweisend
ein Bodenplattenelement (51), das fest an dem Fahrzeugkarosserierahmen (12) an einer Position unterhalb des hinteren Endes des Vordersitzes (35) angeordnet ist, um dadurch einen Aufnahmeraum (52) zwischen dem Bodenplattenelement (51) und einer Bodenfläche des Vordersitzes (35) zu bilden.

## Revendications

1. Véhicule de type à selle, comprenant :
un châssis de carrosserie de véhicule (12),
un siège avant (35) supporté sur le châssis de carrosserie de véhicule (12), le siège avant (35) ayant à une extrémité arrière de celui-ci un bord courbé (35b) qui est en retrait au niveau d'une portion centrale de celui-ci dans une direction de largeur de véhicule vers un avant, en vue en plan ;
un siège arrière (36) supporté sur le châssis de carrosserie de véhicule (12) à une position derrière le siège avant (35), le siège arrière (36) ayant une extrémité avant (36a) bombée au niveau d'une portion centrale de celle-ci dans la direction de largeur de véhicule vers l'avant, en vue en plan, de façon à correspondre au bord courbé (35b) du siège avant (35) de sorte que l'extrémité avant (36a) du siège arrière (36) soit positionnée vers l'avant de l'extrémité arrière du siège avant (35) et, en vue en plan, l'extrémité avant (36a) du siège arrière (36) et l'extrémité arrière du siège avant (35) sont en chevauchement l'une avec l'autre, l'extrémité avant du siège arrière (36) étant placée en dessous de l'extrémité arrière du siège avant (35) ; et
des recouvrements de carrosserie de véhicule (42) montés sur le châssis de carrosserie de véhicule (12) et allant sous le siège avant (35) de façon à être le long d'une surface inférieure du siège avant (35), à des extrémités opposées (45) dans la direction de largeur de véhicule du bord courbé (35b), les recouvrements de carrosserie de véhicule (42) s'étendant à partir des extrémités opposées (45) dans la direction de largeur de véhicule du bord courbé (35b) vers un arrière le long d'une surface inférieure du siège arrière (36) sur des bords opposés (46) du siège arrière (36).

2. Véhicule de type à selle selon la revendication 1, dans lequel
les recouvrements de carrosserie de véhicule (42) ont chacun une surface inclinée (42b) qui descend en allant vers l'avant et va sous l'extrémité arrière du siège avant (35).

3. Véhicule de type à selle selon la revendication 2, dans lequel
le siège arrière (36) a une surface courbée (47) qui se développe à partir de l'extrémité avant (36a) vers l'arrière et est bombée de façon à correspondre au bord courbé (35b) du siège avant (35) pour ainsi être raccordée à une surface d'assise (38) du siège arrière (36).

4. Véhicule de type à selle selon la revendication 2, comprenant en outre :
un organe barre (54a) disposé en dessous d'un plan horizontal (HP) qui comporte l'extrémité arrière du siège avant (35) et derrière la surface inclinée (42b), l'organe barre (54a) s'étendant dans la direction de largeur de véhicule en parallèle avec le plan horizontal (HP) ; et
un organe charnière (57) fixé à une plaque basse du siège arrière (36) à une position derrière l'extrémité avant (36a) du siège arrière (36) pour ainsi s'engager avec l'organe barre (54a).

5. Véhicule de type à selle selon la revendication 4, dans lequel
l'organe charnière (57) comporte
un corps principal (57a) s'étendant sur une première longueur (L1) à partir de la plaque basse du siège arrière (36) vers le bas jusqu'à une position derrière l'organe barre (54a), et
un corps fléchi (57b) s'étendant sur une deuxième longueur (L2) qui est plus courte que la première longueur (L1) de façon à être continu à partir du corps principal (57a) et s'étendre autour d'un côté inférieur de l'organe barre (54a) pour ainsi définir un axe de rotation du siège arrière (36).

6. Véhicule de type à selle selon l'une quelconque des revendications 1 à 5, comprenant en outre :
un organe plaque basse (51) disposé de manière fixe sur le châssis de carrosserie de véhicule (12) à une position en dessous de l'extrémité arrière du siège avant (35), pour ainsi définir un espace de logement (52) entre l'organe plaque basse (51) et une surface basse du siège avant (35).
